# EUROPEAN PATENT APPLICATION

(11) **EP 4 834 172 A1**
(43) Date of publication of application: **04.11.2026**
(21) Application number: 26196443.1
(22) Date of filing: 04.08.2026
(51) Int. Cl.: A45F 5/00, F16M 11/04, H04M 1/04, H04B 1/3827

(54) **A BACK CLIP AND AN ELECTRONIC DEVICE ASSEMBLY**

(30) Priority: 13.08.2025 CN 202521723784 U
(71) Applicant: Shanghai Sunmi Technology Co., Ltd., Shanghai 200433 (CN)
(72) Inventor: QI, Yaokun, Shanghai, 200433 (CN); GU, Laibing, Shanghai, 200433 (CN); LI, Baike, Shanghai, 200433 (CN); LIN, Zhe, Shanghai, 200433 (CN)
(74) Representative: Nederlandsch Octrooibureau

(57) **Abstract**

This disclosure relates to the technical field of electronic device accessories, and discloses a back clip and an electronic device assembly. The back clip comprises a housing, a handle, a first buckle and a stroke conversion mechanism; the handle is movably disposed on the housing along a first direction; the first buckle is movably disposed on the housing along the first direction; the stroke conversion mechanism is disposed inside the housing, with one end mated with the handle and the other end mated with the first buckle. When the handle moves along the first direction, the first buckle is driven by the stroke conversion mechanism to move in the same direction along the first direction, and the moving distance of the first buckle along the first direction is smaller than that of the handle along the first direction. The disclosure can convert the long stroke of the handle into the short stroke of the buckle through the stroke conversion mechanism, so as to provide operational feedback and improve the user experience.

## Description

### Technical Field

This disclosure relates to the technical field of electronic equipment accessories, and particularly refers to a back clip and an electronic device assembly.

### Background

With the widespread popularity of portable electronic devices such as smartphones and tablet computers, users have put forward higher requirements for the convenience and comfort of device usage. As a common auxiliary accessory, the back clip has gradually gained attention. The primary function of the back clip is to lock the electronic device through a buckle mechanism, allowing users to secure the device to their wrist, belt, or desktop, thereby freeing up their hands and preventing hand fatigue caused by holding the device for extended periods.

In the prior art, a back clip typically includes a handle and a buckle. The handle is used to drive the movement of the buckle, enabling the locking and releasing of electronic devices. Due to the constraints imposed by the frame structure, the buckle can only achieve a short displacement. However, the travel distance of the handle and buckle in existing back clips is the same, resulting in a correspondingly short displacement distance when the user pulls the handle. This lack of distinct operational feedback makes it difficult for users to feel clear unlocking or locking feedback during operation, leading to a poor user experience.

### Summary

The purpose of this disclosure is to provide a back clip and an electronic device assembly, which realize converting the long stroke of a handle into the short stroke of a buckle to provide operational feedback and improve the user experience.

The technical solution provided in this disclosure is as follows:
On one hand, a back clip is provided, comprising:
a housing;
a handle, movably disposed on the housing along a first direction;
a first buckle, movably disposed on the housing along the first direction;
a stroke conversion mechanism, disposed inside the housing, with one end mated with the handle and the other end mated with the first buckle, wherein when the handle moves along the first direction, the first buckle is driven by the stroke conversion mechanism to move in the same direction along the first direction, and the moving distance of the first buckle along the first direction is smaller than that of the handle along the first direction.

In some embodiments, the stroke conversion mechanism comprises a first connecting rod and a second connecting rod, the first connecting rod and the second connecting rod are respectively rotatably disposed on the housing;
one end of the first connecting rod is mated with the handle, the other end of the first connecting rod is mated with one end of the second connecting rod, and the other end of the second connecting rod is mated with the first buckle;
when the handle moves along the first direction, the first connecting rod is driven to rotate, the second connecting rod is driven to rotate when the first connecting rod rotates, the rotating direction of the second connecting rod is opposite to that of the first connecting rod, and the first buckle is driven to move along the first direction when the second connecting rod rotates.

In some embodiments, a first protruding portion is provided on the side of the handle adjacent to the first connecting rod, a first mating portion is provided at one end of the first connecting rod, and the first mating portion keeps in contact with the driving surface of the first protruding portion;
when the handle moves along the first direction, the driving surface of the first protruding portion acts on the first mating portion, causing the first connecting rod to rotate.

In some embodiments, a second mating portion is provided at the other end of the first connecting rod, a third mating portion is provided at one end of the second connecting rod, and the third mating portion is provided with a first driven surface abutting against the second mating portion;
when the first connecting rod rotates, the second mating portion slides along the first driven surface of the third mating portion and pushes the third mating portion to drive the second connecting rod to rotate.

In some embodiments, a fourth mating portion is provided at the other end of the second connecting rod, a second protruding portion is provided on the side of the first buckle adjacent to the second connecting rod, and the second protruding portion is provided with a second driven surface abutting against the fourth mating portion;
when the second connecting rod rotates, the fourth mating portion slides along the second driven surface of the second protruding portion and continuously pushes against the second protruding portion, so as to convert the rotational motion of the second connecting rod into the linear motion of the first buckle along the first direction.

In some embodiments, the surface of the first mating portion that mates with the first protruding portion is arc-shaped;
the surface of the second mating portion that mates with the third mating portion is arc-shaped;
the surface of the fourth mating portion that mates with the second protruding portion is arc-shaped.

In some embodiments, an avoidance groove is provided on the first connecting rod adjacent to the first mating portion, and the avoidance groove is used for avoiding the first protruding portion when the first connecting rod rotates.

In some embodiments, a first limiting portion is provided on the housing, a second limiting portion is provided on the first buckle, and the first limiting portion is mated with the second limiting portion to limit the moving direction of the first buckle and its movement stroke along the first direction.

In some embodiments, a third limiting portion is provided on the housing, a fourth limiting portion is provided on the handle, and the third limiting portion is mated with the fourth limiting portion to limit the moving direction of the handle and its movement stroke along the first direction.

In some embodiments, the length of a first force arm from the mating point of the first connecting rod and the handle to the rotation center of the first connecting rod is greater than the length of a second force arm from the mating point of the first connecting rod and the second connecting rod to the rotation center of the first connecting rod;
the length of a third force arm from the mating point of the second connecting rod and the first buckle to the rotation center of the second connecting rod is less than or equal to the length of a fourth force arm from the mating point of the second connecting rod and the first connecting rod to the rotation center of the second connecting rod.

In some embodiments, it further comprises a reverse connecting rod and a second buckle, the reverse connecting rod is rotatably disposed on the housing and linked with the first buckle;
when the first buckle moves along the first direction, the second buckle is synchronously driven by the reverse connecting rod to move in the opposite direction along the first direction.

In some embodiments, it further comprises a first reset member and a second reset member; one end of the first reset member is connected to the housing, and the other end is connected to the first buckle, the first reset member being configured to provide an elastic force for urging the first buckle to reset;
one end of the second reset member is connected to the housing, and the other end is connected to the second buckle, the second reset member being configured to provide an elastic force for urging the second buckle to reset.

In some embodiments, it further comprises a ball plunger and an elastic member, the elastic member telescopically retains the ball plunger on the housing, a limiting groove is provided on the handle, and when the handle moves to a limit position along the first direction, the ball plunger is snapped into the limiting groove under the elastic force of the elastic member.

In some embodiments, the stroke conversion mechanism comprises a gear, a first rack, and a second rack, the gear is rotatably disposed on the housing, and the gear comprises a large-diameter gear and a small-diameter gear which are integrally and coaxially arranged;
the first rack is fixed to the handle, the second rack is fixed to the first buckle, and the first rack and the second rack are parallel to the first direction and located on the same side of the gear;
the first rack engages with the large-diameter gear, and the second rack engages with the small-diameter gear; the pitch radius of the large-diameter gear is larger than that of the small-diameter gear, so that the moving distance of the first buckle along the first direction is smaller than that of the handle along the first direction.

On the other hand, an electronic device assembly is also provided, comprising an electronic device and the back clip according to any one of the above embodiments, wherein the electronic device is detachably mounted on the back clip.

The technical effect of the present disclosure lies in that: a stroke conversion mechanism is arranged between the handle and the first buckle, and the stroke conversion mechanism is used to convert the long-distance movement of the handle along the first direction into a short-distance movement of the first buckle in the same direction. This solves the problem of the handle still being able to obtain a sufficiently long operating stroke even when the displacement distance of the first buckle is limited by the frame structure of the housing. As a result, the user has a clear hand feel and definite feedback when operating the handle, which reduces the probability of misoperation and improves the user experience.

### Brief Description of the Drawings

The present disclosure will be further elaborated below in conjunction with the accompanying drawings and specific embodiments:
FIG. 1 is a schematic structural diagram of the back clip in a locked state according to an embodiment of the present disclosure;
FIG. 2 is a schematic structural diagram of the back clip in an unlocked state according to an embodiment of the present disclosure;
FIG. 3 is a schematic structural diagram of the stroke conversion mechanism according to an embodiment of the present disclosure;
FIG. 4 is a schematic diagram of the force arms of the stroke conversion mechanism according to an embodiment of the present disclosure;
FIG. 5 is a cross-sectional schematic diagram of the back clip according to an embodiment of the present disclosure.

### Explanation of reference numerals:

10. Housing; 11. First limiting portion; 12. Third limiting portion; 20. Handle; 21. Handle main body; 22. Handle connecting rod; 221. First protruding portion; 23. Fourth limiting portion; 30. First buckle; 31. Second protruding portion; 32. Second limiting portion; 33. Toggle portion; 40. Stroke conversion mechanism; 41. First connecting rod; 411. First mating portion; 412. Second mating portion; 413. Avoidance groove; 42. Second connecting rod; 421. Third mating portion; 422. Fourth mating portion; 43. First rotating shaft; 44. Second rotating shaft; 50. Reverse connecting rod; 60. Second buckle; 71. First reset member; 72. Second reset member; 73. Third reset member; 80. Ball plunger.

### Preferred Embodiment of the Present Disclosure

In the following description, for the purpose of explanation rather than limitation, specific details such as specific system structures and technologies are proposed to thoroughly understand the embodiments of the present disclosure. However, it should be clear to those skilled in the art that the present disclosure can also be implemented in other embodiments without these specific details. In other cases, detailed descriptions of well-known systems, devices, circuits and methods are omitted to avoid unnecessary details hindering the description of the present disclosure.

To more clearly illustrate the embodiments of the disclosure or the technical solutions in the prior art, the specific implementations of the present disclosure will be described below with reference to the accompanying drawings. Obviously, the drawings in the following description are only some embodiments of the present disclosure, and for those of ordinary skill in the art, other drawings can be obtained according to these drawings and other implementations without creative labor.

To keep the drawings concise, only the parts related to the present disclosure are schematically shown in each drawing, and they do not represent the actual structure of the product. In addition, to make the drawings concise and easy to understand, for components with the same structure or function in some drawings, only one of them is schematically illustrated or marked. In this document, "one" not only means "only one" but also can mean "the case of more than one".

It should be further understood that the term "and/or" used in the specification and the appended claims of the present disclosure refers to any combination and all possible combinations of one or more of the associated listed items, and includes these combinations.

It should be noted that, unless otherwise clearly specified and limited, the terms "installation", "connection" and "linkage" in this document should be understood in a broad sense. For example, it may be a fixed connection, a detachable connection, or an integral connection; it may be a mechanical connection or an electrical connection; it may be a direct connection, an indirect connection through an intermediate medium, or internal communication between two components. For ordinary skilled in the art, the specific meanings of the above terms in the present disclosure can be understood according to specific circumstances.

In the embodiments shown in the accompanying drawings, the indication of directions (such as up, down, left, right, front and rear) is relative rather than absolute when describing the structure and movement of each component, and is not used to limit the direction of the product in actual use.

In addition, in the description of the present disclosure, ordinal numbers such as "first" and "second" are only used to distinguish the described associated objects, and cannot be understood as indicating or implying the relative importance or order of the associated objects.

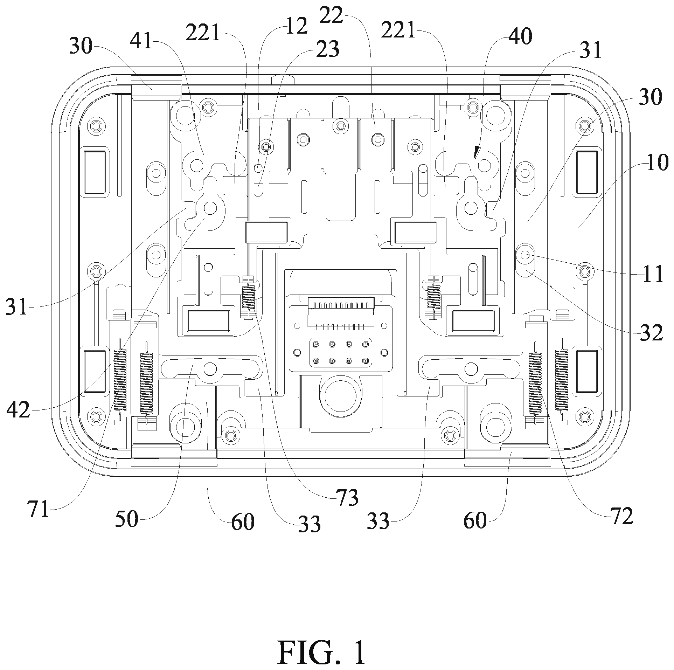

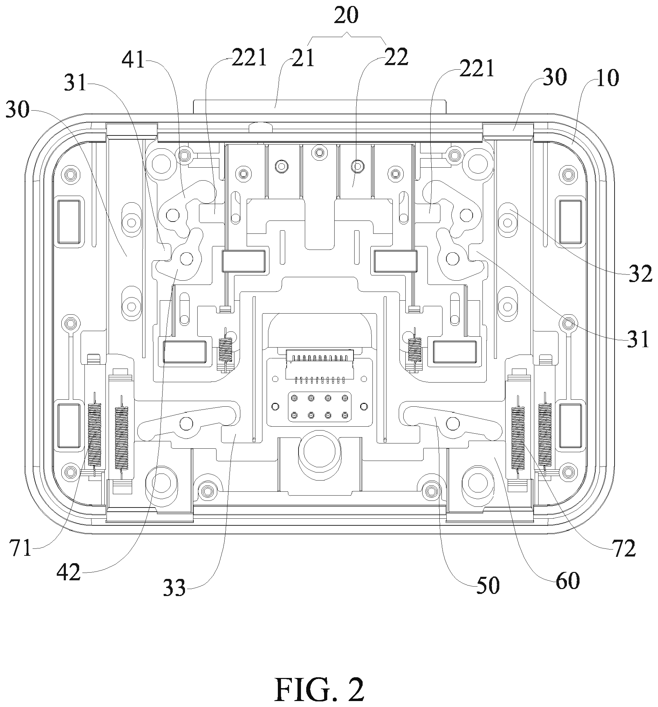

As shown in FIGs. 1 and 2, in one or more embodiments, the present disclosure provides a back clip, comprising a housing 10, a handle 20, a first buckle 30 and a stroke conversion mechanism 40; the handle 20 is movably disposed on the housing 10 along a first direction; the first buckle 30 is movably disposed on the housing 10 along the first direction; the stroke conversion mechanism 40 is disposed inside the housing 10, with one end mated with the handle 20 and the other end mated with the first buckle 30. When the handle 20 moves along the first direction, the first buckle 30 is driven by the stroke conversion mechanism 40 to move in the same direction along the first direction, and the moving distance of the first buckle 30 along the first direction is smaller than that of the handle 20 along the first direction.

Specifically, the housing 10 is generally in a flat box-shaped or flat plate-shaped structure, which is used for installing the handle 20, the first buckle 30 and the stroke conversion mechanism 40, and for fixing and supporting the electronic device. The handle 20 is slidably embedded in the guide groove of the housing 10 and can reciprocate along the first direction, the first direction may be the length direction or width direction of the housing 10. A part of the handle 20 is located outside the housing 10 to facilitate the user to operate the handle 20 to realize the movement of the handle 20 along the first direction, and the other part of the handle 20 is located inside the housing 10 to realize the cooperation with the stroke conversion mechanism 40 and drive the stroke conversion mechanism 40 to move during the movement. Exemplarily, the handle 20 comprises a handle main body 21 and a handle connecting rod 22, the handle main body 21 is located outside the housing 10, the handle connecting rod 22 is located inside the housing 10, and the handle main body 21 is fixedly connected with or integrally arranged with the handle connecting rod 22 to realize the synchronous movement of the handle main body 21 and the handle connecting rod 22.

The first buckle 30 is disposed on any side of the housing 10, and the front end of the first buckle 30 is provided with a hook-shaped clamping portion for clamping the frame of the electronic device. The first buckle 30 can reciprocate along the first direction; when the first buckle 30 moves to the position toward the center of the housing 10 along the first direction, the electronic device can be fixed; when the first buckle 30 moves away from the center of the housing 10 along the first direction, the electronic device can be released, and the electronic device can then be removed from the back clip.

The stroke conversion mechanism 40 is disposed between the handle 20 and the first buckle 30, and is used to convert the long-distance movement of the handle 20 along the first direction into a short-distance movement of the first buckle 30 in the same direction. This solves the problem that the handle 20 can still obtain a sufficiently long operating stroke when the first buckle 30 has a short displacement distance due to the limitation of the frame structure of the housing 10. As a result, the user has a clear hand feel and definite feedback when operating the handle 20, which reduces the probability of misoperation and improves the user experience.

In some embodiments, as shown in FIGs. 1 to 3, the stroke conversion mechanism 40 comprises a first connecting rod 41 and a second connecting rod 42, and the first connecting rod 41 and the second connecting rod 42 are respectively rotatably disposed on the housing 10; one end of the first connecting rod 41 is mated with the handle 20, the other end of the first connecting rod 41 is mated with one end of the second connecting rod 42, and the other end of the second connecting rod 42 is mated with the first buckle 30; when the handle 20 moves along the first direction, it drives the first connecting rod 41 to rotate. As the first connecting rod 41 rotates, it drives the second connecting rod 42 to rotate, and the rotating direction of the second connecting rod 42 is opposite to that of the first connecting rod 41. When the second connecting rod 42 rotates, it drives the first buckle 30 to move along the first direction.

A first rotating shaft 43 and a second rotating shaft 44 are disposed inside the housing 10, the first connecting rod 41 is rotatably connected to the housing 10 via the first rotating shaft 43, the first rotating shaft 43 forms the rotation center of the first connecting rod 41, and the first rotating shaft 43 is located between the two ends of the first connecting rod 41. The second connecting rod 42 is rotatably connected to the housing 10 via the second rotating shaft 44, the second rotating shaft 44 forms the rotation center of the second connecting rod 42, and the second rotating shaft 44 is located between the two ends of the second connecting rod 42. The axial direction of the first rotating shaft 43 is parallel to that of the second rotating shaft 44, and both are perpendicular to the plane where the housing 10 is located.

When the handle 20 moves along the first direction, the first connecting rod 41 is driven to rotate clockwise or counterclockwise through the cooperation between the handle 20 and the first connecting rod 41. When the first connecting rod 41 rotates, it drives the second connecting rod 42 to rotate in the opposite direction, that is, when the first connecting rod 41 rotates clockwise, the second connecting rod 42 rotates counterclockwise; when the first connecting rod 41 rotates counterclockwise, the second connecting rod 42 rotates clockwise. When the second connecting rod 42 rotates, it drives the first buckle 30 to move in the same direction as the handle 20 along the first direction.

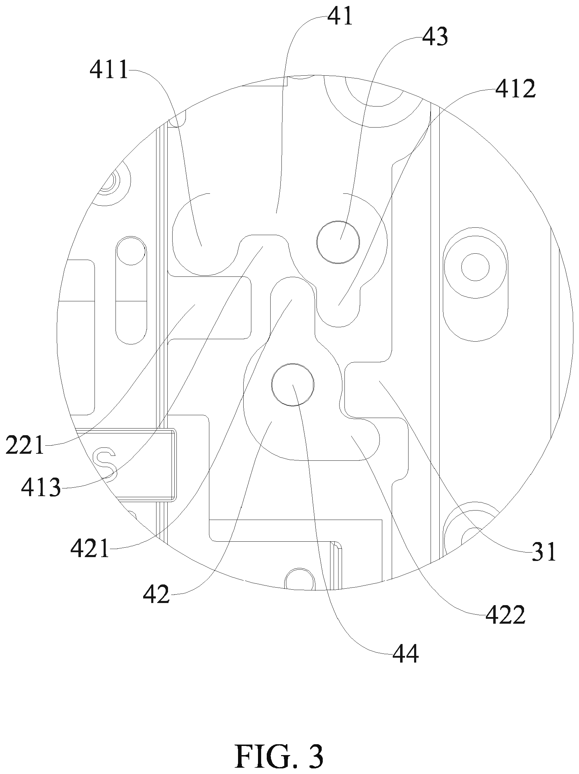

In some embodiments, as shown in FIG. 3, a first protruding portion 221 is provided on the side of the handle 20 adjacent to the first connecting rod 41, a first mating portion 411 is provided at one end of the first connecting rod 41, and the first mating portion 411 keeps in contact with the driving surface of the first protruding portion 221; when the handle 20 moves along the first direction, the driving surface of the first protruding portion 221 acts on the first mating portion 411 to rotate the first connecting rod 41.

The first mating portion 411 of the first connecting rod 41 is always in contact with the driving surface of the first protruding portion 221. Once the handle 20 starts to move, the force is immediately transmitted to the first connecting rod 41 through the driving surface of the first protruding portion 221 without gaps, eliminating the idle stroke and realizing "zero-delay" start.

In some embodiments, as shown in FIG. 3, a second mating portion 412 is provided at the other end of the first connecting rod 41, a third mating portion 421 is provided at one end of the second connecting rod 42, and the third mating portion 421 is provided with a first driven surface abutting against the second mating portion 412; when the first connecting rod 41 rotates, the second mating portion 412 slides along the first driven surface of the third mating portion 421 and pushes the third mating portion 421 to drive the second connecting rod 42 to rotate.

The second mating portion 412 is always attached to the driven surface of the third mating portion 421. When the first connecting rod 41 rotates, the second mating portion 412 slides along the driven surface of the third mating portion 421, driving the second connecting rod 42 to rotate synchronously, and forming a continuous rolling-sliding composite motion, eliminating the transmission idle stroke and ensuring the instantaneity and accuracy of force transmission between the first connecting rod 41 and the second connecting rod 42.

In some embodiments, as shown in FIG. 3, a fourth mating portion 422 is provided at the other end of the second connecting rod 42, a second protruding portion 31 is provided on the side of the first buckle 30 adjacent to the second connecting rod 42, and the second protruding portion 31 is provided with a second driven surface abutting against the fourth mating portion 422; when the second connecting rod 42 rotates, the fourth mating portion 422 slides along the second driven surface of the second protruding portion 31 and continuously pushes against the second protruding portion 31, so as to convert the rotational motion of the second connecting rod 42 into the linear motion of the first buckle 30 along the first direction.

The fourth mating portion 422 of the second connecting rod 42 is always in contact with the second protruding portion 31. When the second connecting rod 42 rotates, the fourth mating portion 422 performs a rolling-sliding composite motion along the driven surface of the second protruding portion 31, and continuously pushes the second protruding portion 31 along the first direction during the rotation of the second connecting rod 42, realizing the synchronous movement of the first buckle 30 and the handle 20.

Preferably, the surface of the first mating portion 411 mated with the first protruding portion 221 is arc-shaped; the surface of the second mating portion 412 mated with the third mating portion 421 is arc-shaped; the surface of the fourth mating portion 422 mated with the second protruding portion 31 is arc-shaped. The cooperation between the handle 20 and the first connecting rod 41, the cooperation between the first connecting rod 41 and the second connecting rod 42, and the cooperation between the second connecting rod 42 and the first buckle 30 all adopt arc-shaped surfaces to form rolling-sliding composite motion, which always maintains line contact, reduces the friction between the mating surfaces, ensures continuous and stable torque transmission, and avoids jamming.

In some embodiments, an avoidance groove 413 is provided on the first connecting rod 41 adjacent to the first mating portion 411, and the avoidance groove 413 is used for avoiding the first protruding portion 221 when the first connecting rod 41 rotates. The first protruding portion 221 is a rigid cantilever or an integrated boss provided on the handle 20. When the first connecting rod 41 rotates around its rotation center, the first protruding portion 221 will interfere with the first connecting rod 41. By providing the avoidance groove 413 on the first connecting rod 41, the avoidance groove 413 is opened in the form of a notch or a cavity. Thus, no matter how large the rotation angle of the first connecting rod 41 is, the first protruding portion 221 can always be in the avoidance groove 413, ensuring no mechanical collision between the first protruding portion 221 and the first connecting rod 41, and making the rotation continuous and smooth.

In some embodiments, as shown in FIGs. 1 and 2, a first limiting portion 11 is provided on the housing 10, a second limiting portion 32 is provided on the first buckle 30, and the first limiting portion 11 is mated with the second limiting portion 32 to limit the movement stroke of the first buckle 30 along the first direction. The first limiting portion 11 may be a limiting block, and the second limiting portion 32 may be a limiting groove. The limiting groove extends along the first direction. When the first buckle 30 moves to the position where the limiting block is located at one end of the limiting groove, the first buckle 30 stops moving further, ensuring that the stroke of the first buckle 30 is locked at a set value, and avoiding collision damage between the first buckle 30 and other components. In addition, through the cooperation between the first limiting portion 11 and the second limiting portion 32, the displacement direction of the first buckle 30 is also limited, so that the first buckle 30 can only move along the first direction without left-right deviation. In other embodiments, the first limiting portion 11 may be a limiting groove, and the second limiting portion 32 may be a limiting block, or both the first limiting portion 11 and the second limiting portion 32 may be limiting blocks. When the first buckle 30 moves to the position where the two limiting blocks abut against each other, it stops moving.

In some embodiments, a third limiting portion 12 is provided on the housing 10, a fourth limiting portion 23 is provided on the handle 20, and the third limiting portion 12 is mated with the fourth limiting portion 23 to limit the movement stroke of the handle 20 along the first direction and enable the handle 20 to only move along the first direction, avoiding the handle 20 deviating from the first direction when moving. In this embodiment, the third limiting portion 12 is a limiting block, and the fourth limiting portion 23 is a limiting groove. In other embodiments, the third limiting portion 12 may be a limiting groove, and the fourth limiting portion 23 may be a limiting block. When performing movement limitation, the limiting structure on the handle 20 or the limiting structure on the first buckle 30 may be used for limitation.

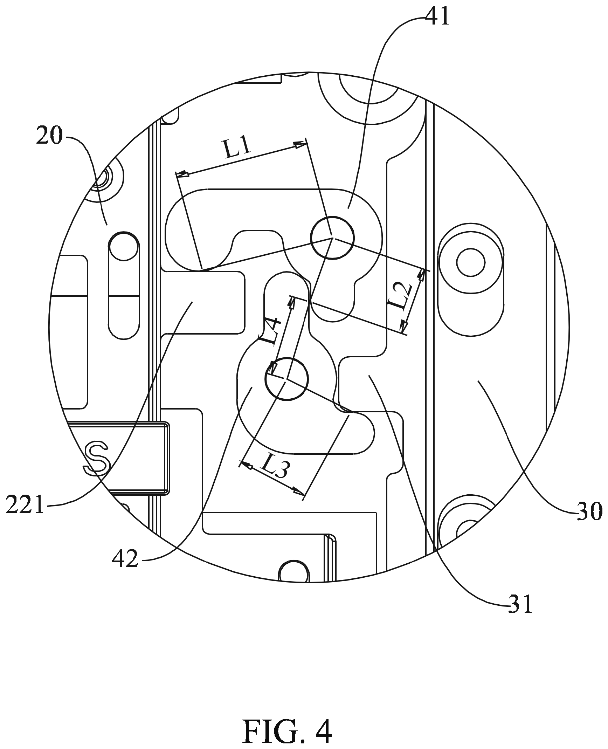

In some embodiments, as shown in Fig. 4, the length of a first force arm L1 from the mating point of the first connecting rod 41 and the handle 20 to the rotation center of the first connecting rod 41 is greater than the length of a second force arm L2 from the mating point of the first connecting rod 41 and the second connecting rod 42 to the rotation center of the first connecting rod 41; the length of a third force arm L3 from the mating point of the second connecting rod 42 and the first buckle 30 to the rotation center of the second connecting rod 42 is less than or equal to the length of a fourth force arm L4 from the mating point of the second connecting rod 42 and the first connecting rod 41 to the rotation center of the second connecting rod 42.

In this embodiment, the rotation center of the first connecting rod 41 is the center of the first rotating shaft 43 in the above embodiment, and the rotation center of the second connecting rod 42 is the center of the second rotating shaft 44 in the above embodiment. The mating point of the first connecting rod 41 and the handle 20 refers to the instantaneous contact position where the handle directly transmits force with the first connecting rod 41 during movement, that is, the actual contact position between the first protruding portion 221 of the handle 20 and the first mating portion 411 of the first connecting rod 41; similarly, the mating point of the first connecting rod 41 and the second connecting rod 42 refers to the actual contact position between the second mating portion 412 and the third mating portion 421, and the mating point of the second connecting rod 42 and the first buckle 30 refers to the actual contact position between the fourth mating portion 422 and the second protruding portion 31.

The length of the first force arm from the mating point of the first connecting rod 41 and the handle 20 to the rotation center of the first connecting rod 41 is greater than the length of the second force arm from the mating point of the first connecting rod 41 and the second connecting rod 42 to the rotation center of the first connecting rod 41. This structural design can form a first-stage lever to reduce the stroke of the handle. The length of the third force arm from the mating point of the second connecting rod 42 and the first buckle 30 to the rotation center of the second connecting rod 42 is less than or equal to the length of the fourth force arm from the mating point of the second connecting rod 42 and the first connecting rod 41 to the rotation center of the second connecting rod 42. The second-stage lever maintains or continues to reduce the stroke. After the superposition of the two-stage levers, the movement stroke of the first buckle 30 along the first direction is smaller than that of the handle 20 along the first direction. For example, when the handle 20 moves 5mm, the first buckle 30 moves 2mm through the arrangement of the first connecting rod 41 and the second connecting rod 42. In practical applications, the lengths of the first force arm, the second force arm, the third force arm and the fourth force arm can be designed according to the required actual stroke ratio between the handle 20 and the first buckle 30. This embodiment does not specifically limit the actual stroke ratio between the handle 20 and the first buckle 30, nor does it specifically limit the lengths of the first force arm, the second force arm, the third force arm and the fourth force arm.

In some embodiments, as shown in FIGs. 1 and 2, it further comprises a reverse connecting rod 50 and a second buckle 60, and the reverse connecting rod 50 is rotatably disposed on the housing 10 and linked with the first buckle 30; when the first buckle 30 moves along the first direction, the second buckle 60 is synchronously driven by the reverse connecting rod 50 to move in the opposite direction along the first direction.

The first buckle 30 and the second buckle 60 are respectively disposed on the upper and lower sides or left and right sides of the housing 10. In the locked state, the first buckle 30 and the second buckle 60 respectively clamp the frames on both sides of the electronic device. When unlocking, the user pulls the handle 20, drives the first buckle 30 to move outward along the first direction through the stroke conversion mechanism 40, a toggle portion 33 is provided at the lower end of the first buckle 30, the toggle portion 33 abuts against the reverse connecting rod 50, and when the first buckle 30 moves outward along the first direction, the reverse connecting rod 50 is driven to rotate around its central rotating shaft through the toggle portion 33. When the reverse connecting rod 50 rotates, it drives the second buckle 60 to move in the opposite direction along the first direction, that is, when the first buckle 30 moves upward, the second buckle 60 moves downward, realizing the synchronous release of the electronic device by the first buckle 30 and the second buckle 60. Similarly, limiting portions are respectively provided on the second buckle 60 and the housing 10, and the movement stroke of the second buckle is limited through the cooperation of the two limiting portions.

In this embodiment, by arranging the reverse connecting rod 50 mated with the first buckle 30, the buckles on both sides can be moved simultaneously by pulling the handle 20 once, thereby realizing unlocking with one-hand operation and improving operational convenience. The first buckle 30 and the second buckle 60 are respectively located on both sides of the electronic device, and the buckles on both sides move synchronously in opposite directions, with symmetrical clamping force, so that the electronic device is stressed evenly, avoiding loosening or scratching of the electronic device caused by unilateral deflection.

The rotating force arms on both sides of the reverse connecting rod 50 can be adjusted according to the needs of the extension length of the second buckle 60, which realizes the adjustment of the moving distance of the second buckle along the first direction. Preferably, the rotating force arms on both sides of the reverse connecting rod 50 are of equal length, that is, the rotation center of the reverse connecting rod 50 is the center of the reverse connecting rod, and the distance from one end of the reverse connecting rod 50 to the rotation center of the reverse connecting rod 50 is equal to the distance from the other end of the reverse connecting rod 50 to the rotation center of the reverse connecting rod 50, so that the moving distance of the second buckle 60 along the first direction is the same as that of the first buckle 30, realizing the equidistant movement of the first buckle 30 and the second buckle 60.

Further, the number of the first buckle 30 and the second buckle 60 may be two respectively, the two first buckles 30 are respectively disposed on both sides of the handle 20, and a stroke conversion mechanism is disposed between each first buckle 30 and the handle 20 to drive the first buckle 30 to move through the handle 20. The two second buckles 60 are disposed in one-to-one correspondence with the two first buckles 30, and each second buckle 60 is cooperatively connected with one first buckle 30 through one reverse connecting rod 50 to realize the synchronous driving of the second buckle 60 to move and unlock through the first buckle 30.

In some embodiments, as shown in FIGs. 1 and 2, it further comprises a first reset member 71 and a second reset member 72. One end of the first reset member 71 is connected to the housing 10, and the other end is connected to the first buckle 30. The first reset member 71 is configured to provide an elastic force urging the first buckle 30 to reset. One end of the second reset member 72 is connected to the housing 10, and the other end is connected to the second buckle 60 , which is configured to provide an elastic force urging the second buckle 60 to reset.

Upon unlocking, the user pulls the handle 20, the stroke conversion mechanism 40 drives the first buckle 30 to move along the first direction, and the first buckle 30 then drives the second buckle 60 to move in the opposite direction along the first direction to realize unlocking. At this time, both the first reset member 71 and the second reset member 72 are in the energy storage stage. After releasing the handle 20, the first buckle 30 moves back to the initial position in the opposite direction along the first direction under the action of the first reset member 71, and the second buckle 60 resets under the elastic force of the second reset member 72, realizing the automatic reset and locking of the first buckle 30 and the second buckle 60.

In this embodiment, the first reset member 71 and the second reset member 72 may be springs, shrapnels, etc. The number of the first reset member 71 is the same as that of the first buckle 30, and the first reset member 71 is connected to the first buckle 30 in one-to-one correspondence. The number of the second reset member 72 is the same as that of the second buckle 60, and the second reset member 72 is connected to the second buckle 60 in one-to-one correspondence.

In this embodiment, the automatic reset of the first buckle 30 and the second buckle 60 can be realized by arranging the first reset member 71 and the second reset member 72, and there is no need to manually push back the first buckle 30 and the second buckle 60, realizing the effect of one-pull unlocking and one-release locking, making one-hand operation more convenient.

Further, it also comprises a third reset member 73, one end of the third reset member 73 is connected to the housing 10, and the other end is connected to the handle 20. After the handle 20 is pulled to move by an external force, the handle 20 is automatically reset through the third reset member 73.

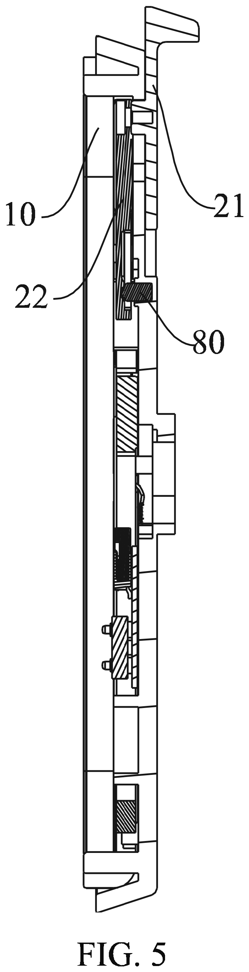

In some embodiments, as shown in FIG. 5, it further comprises a ball plunger 80 and an elastic member, the elastic member telescopically retains the ball plunger 80 on the housing 10, a limiting groove is provided on the handle 20, and when the handle 20 moves to a limit position along the first direction, the ball plunger 80 is snapped into the limiting groove under the elastic force of the elastic member.

When the handle 20 moves to the limit position along the first direction, the ball plunger 80 is snapped into the limiting groove under the action of the elastic member, generating clear tactile and auditory feedback, and the user can immediately perceive that the unlocking limit position has been reached. At this time, the user can install or remove the electronic device. After releasing the handle 20, the first reset member 71 and the second reset member 72 pull the first buckle 30 and the second buckle 60 back to lock the electronic device.

In some embodiments, the stroke conversion mechanism 40 comprises a gear, a first rack and a second rack, the gear is rotatably disposed on the housing 10, and the gear comprises a large-diameter gear and a small-diameter gear which are integrally and coaxially arranged; the first rack is fixed to the handle 20, the second rack is fixed to the first buckle 30, and the first rack and the second rack are parallel to the first direction and located on the same side of the gear; the first rack engages with the large-diameter gear, and the second rack engages with the small-diameter gear; the pitch radius of the large-diameter gear is larger than that of the small-diameter gear, so that the moving distance of the first buckle 30 along the first direction is smaller than that of the handle 20 along the first direction.

In this embodiment, the extending direction (axial direction) of the rotating shafts of the large-diameter gear and the small-diameter gear may be parallel to the plane where the housing 10 is located and perpendicular to the first direction, and the first rack and the second rack are respectively parallel to the first direction. For example, when the first direction is the width direction of the housing 10, the rotating shafts of the large-diameter gear and the small-diameter gear extend along the length direction of the housing 10, and the first rack and the second rack respectively extend along the width direction of the housing 10. The first rack is fixed on the handle 20 and engages with the large-diameter gear, and the second rack is fixed on the first buckle 30 and engages with the small-diameter gear.

When the user pulls the handle 20 to move a distance L_{H} along the first direction, the first rack drives the large-diameter gear to rotate by an angleθ=L_{H}/R, wherein R is the pitch radius of the large-diameter gear, and the coaxial small-diameter gear rotates synchronously by the same angleθ. The small-diameter gear drives the second rack and the first buckle 30 to move a distance L_{C} =θ×r in the same direction along the first direction, wherein r is the pitch radius of the small-diameter gear. Since R>r, L_{C}=(r/R)×L_{H}<L_{H}, it realizes stroke compression.

In this embodiment, the stroke ratio between the first buckle 30 and the handle 20 is i=r/R. Exemplarily, when R=5mm and r=2mm, i=2.5, and a 5mm stroke of the handle can realize a 2mm stroke of the buckle. The first rack and the second rack are arranged on the same side and parallel to the first direction, and the first buckle 30 and the handle 20 always move linearly in the same direction without transverse component force, reducing guide rail wear and improving service life.

The present disclosure also provides an embodiment of an electronic device assembly, comprising an electronic device and the back clip according to any one of the above embodiments, the electronic device being detachably mounted on the back clip, and the structural diagrams of the back clip are shown in FIGs. 1 to 5. The electronic device can be fixed to the back clip, and the electronic device can be a mobile phone, a tablet computer, a reader, etc. The back clip can be a wristband-type back clip or a bracket-type back clip. The wristband-type back clip is provided with a wristband, and the user can hold it by hand or fix it on the wrist. The bracket-type back clip is provided with a bracket for stably placing the back clip on a desktop or other planes. The bracket can adjust the angle of the supporting structure, which can adjust the viewing angle of the electronic device according to the user's needs, meet the user's use needs in different scenarios, and improve the practicality and convenience of the back clip.

In the above embodiments, the description of each embodiment has its own emphasis. For parts not described or recorded in detail in a certain embodiment, reference can be made to the relevant descriptions of other embodiments.

It should be noted that the above embodiments can be freely combined as needed. The above description is only a preferred embodiment of the present disclosure, and it should be pointed out that for those of ordinary skill in the art, without departing from the principle of the present disclosure, several improvements and modifications can also be made, and these improvements and modifications should also be regarded as the protection scope of the present disclosure.

## Claims

1. A back clip, comprising:
a housing;
a handle, movably disposed on the housing along a first direction;
a first buckle, movably disposed on the housing along the first direction;
a stroke conversion mechanism, disposed inside the housing, with one end mated with the handle and the other end mated with the first buckle, and when the handle moves along the first direction, the first buckle is driven by the stroke conversion mechanism to move in same direction along the first direction, and a moving distance of the first buckle along the first direction is smaller than that of the handle along the first direction.

2. The back clip of claim 1, wherein,
the stroke conversion mechanism comprises a first connecting rod and a second connecting rod, and the first connecting rod and the second connecting rod are respectively rotatably disposed on the housing;
one end of the first connecting rod is mated with the handle, the other end of the first connecting rod is mated with one end of the second connecting rod, and the other end of the second connecting rod is mated with the first buckle;
when the handle moves along the first direction, the first connecting rod is driven to rotate, the second connecting rod is driven to rotate when the first connecting rod rotates, a rotating direction of the second connecting rod is opposite to that of the first connecting rod, and the first buckle is driven to move along the first direction when the second connecting rod rotates.

3. The back clip of claim 2, wherein,
a first protruding portion is provided on a side of the handle adjacent to the first connecting rod, a first mating portion is provided at one end of the first connecting rod, and the first mating portion keeps in contact with the driving surface of the first protruding portion;
when the handle moves along the first direction, a driving surface of the first protruding portion acts on the first mating portion, causing the first connecting rod to rotate.

4. The back clip of claim 3, wherein,
a second mating portion is provided at the other end of the first connecting rod, a third mating portion is provided at one end of the second connecting rod, and the third mating portion is provided with a first driven surface abutting against the second mating portion;
when the first connecting rod rotates, the second mating portion slides along the first driven surface of the third mating portion and pushes the third mating portion to drive the second connecting rod to rotate.

5. The back clip of claim 4, wherein,
a fourth mating portion is provided at the other end of the second connecting rod, a second protruding portion is provided on a side of the first buckle adjacent to the second connecting rod, and the second protruding portion is provided with a second driven surface abutting against the fourth mating portion;
when the second connecting rod rotates, the fourth mating portion slides along the second driven surface of the second protruding portion and continuously pushes against the second protruding portion, so as to convert a rotational motion of the second connecting rod into a linear motion of the first buckle along the first direction.

6. The back clip of claim 5, wherein,
a surface of the first mating portion that mates with the first protruding portion is arc-shaped;
a surface of the second mating portion that mates with the third mating portion is arc-shaped;
a surface of the fourth mating portion that mates with the second protruding portion is arc-shaped.

7. The back clip of claim 3, wherein,
an avoidance groove is provided on the first connecting rod adjacent to the first mating portion, and the avoidance groove is used for avoiding the first protruding portion when the first connecting rod rotates.

8. The back clip of claim 1, wherein,
a first limiting portion is provided on the housing, a second limiting portion is provided on the first buckle, and the first limiting portion is mated with the second limiting portion to limit a moving direction of the first buckle and its movement stroke along the first direction.

9. The back clip of claim 8, wherein,
a third limiting portion is provided on the housing, a fourth limiting portion is provided on the handle, and the third limiting portion is mated with the fourth limiting portion to limit a moving direction of the handle and its movement stroke along the first direction.

10. The back clip of claims 2, wherein,
a length of a first force arm from a mating point of the first connecting rod and the handle to a rotation center of the first connecting rod is greater than a length of a second force arm from the mating point of the first connecting rod and the second connecting rod to the rotation center of the first connecting rod;
a length of a third force arm from the mating point of the second connecting rod and the first buckle to a rotation center of the second connecting rod is less than or equal to a length of a fourth force arm from the mating point of the second connecting rod and the first connecting rod to the rotation center of the second connecting rod.

11. The back clip of claims 1, further comprising:
a reverse connecting rod and a second buckle, and the reverse connecting rod is rotatably disposed on the housing and linked with the first buckle;
when the first buckle moves along the first direction, the second buckle is synchronously driven by the reverse connecting rod to move in an opposite direction along the first direction.

12. The back clip of claim 11, further comprising:
a first reset member and a second reset member; one end of the first reset member is connected to the housing, and the other end is connected to the first buckle, the first reset member being configured to provide an elastic force for urging the first buckle to reset;
one end of the second reset member is connected to the housing, and the other end is connected to the second buckle, the second reset member being configured to provide an elastic force for urging the second buckle to reset.

13. The back clip of claims 1, further comprising:
a ball plunger and an elastic member, wherein the elastic member telescopically retains the ball plunger on the housing, a limiting groove is provided on the handle, and when the handle moves to a limit position along the first direction, the ball plunger is snapped into the limiting groove under an elastic force of the elastic member.

14. The back clip of claim 1, wherein,
the stroke conversion mechanism comprises a gear, a first rack, and a second rack, the gear is rotatably disposed on the housing, and the gear comprises a large-diameter gear and a small-diameter gear which are integrally and coaxially arranged;
the first rack is fixed to the handle, the second rack is fixed to the first buckle, and the first rack and the second rack are parallel to the first direction and located on a same side of the gear;
the first rack engages with the large-diameter gear, and the second rack engages with the small-diameter gear; a pitch radius of the large-diameter gear is larger than that of the small-diameter gear, so that a moving distance of the first buckle along the first direction is smaller than that of the handle along the first direction.

15. An electronic device assembly, comprising: an electronic device and the back clip of claims 1, and the electronic device is detachably mounted to the back clip.
